# EUROPÄISCHE PATENTSCHRIFT

(11) **EP 4 133 199 B1**
(45) Veröffentlichungstag und Bekanntmachung des Hinweises auf die Patenterteilung: **07.08.2024**
(21) Anmeldenummer: 21732277.5
(22) Anmeldetag: 11.06.2021
(51) Int. Cl.: F16K 11/16, F16K 11/22, F16K 31/00, F16K 31/06, F16K 11/07

(54) **VENTILVORRICHTUNG**
VALVE DEVICE
SYSTÈME DE SOUPAPE

(30) Priorität: 23.06.2020 DE 102020003751
(43) Veröffentlichungstag der Anmeldung: 15.02.2023
(73) Patentinhaber: BIERI HYDRAULIK AG, CH-3097 Liebefeld (CH)
(72) Erfinder: SCHNEIDER, Wolfgang Friedrich Wilhelm, 3600 Thun (CH); TANNER, Roger Daniel, 3097 Liebefeld (CH)
(74) Vertreter: Bartels und Partner, Patentanwälte
(86) Internationale Anmeldenummer: PCT/EP2021/065746
(87) Internationale Veröffentlichungsnummer: WO 2021/259667

(56) Entgegenhaltungen:
- DE-A1- 102015 225 858
- DE-B3- 102016 213 820
- US-A- 3 088 489

## Beschreibung

Die Erfindung betrifft eine Ventilvorrichtung mit den Merkmalen des Oberbegriffs des Anspruchs 1.

DE 196 17 849 A1 offenbart eine Vorrichtung zum Klemmen eines Kolbens eines Wegeventils in seiner jeweiligen Einstellposition. Die Vorrichtung weist ein Ventilgehäuse auf, in dem der Kolben axial verschiebbar angeordnet ist. An den axialen Enden des Ventilgehäuses ist jeweils eine Klemmeinrichtung vorgesehen. An das jeweilige axiale Ende des Ventilkolbens schließt sich jeweils ein angesetztes Kolbenteil an, dessen Querschnitt sich in Richtung seines freien Endes konisch erweitert und der jeweils von einem Käfig der Klemmeinrichtung umfasst ist. Der Käfig ist mit Ausnehmungen versehen, in die Klemmkörper in Form von Kugeln eingesetzt sind, die in Radialrichtung zwischen dem Kolbenteil an dem Ventilkolben und dem Ventilgehäuse angeordnet sind. Wenn der Ventilkolben aufgrund von Strömungskräften eine Bewegung entgegen der Schaltrichtung auszuführen sucht, setzt die Klemmwirkung der Klemmeinrichtung ein. Dabei werden die Kugeln durch den jeweiligen Kolbenteil radial gegen eine im Ventilgehäuse fest eingebaute Hülse gedrückt, wodurch der Ventilkolben reibungsunterstützt formschlüssig axial gehalten wird. Wenn der Ventilkolben in seine andere Schaltstellung gebracht werden soll, wirkt eine Magnetbetätigungseinrichtung mit ihrem Stößel auf den Käfig ein, wodurch der Käfig in Richtung des Ventilkolbens derart verfahren wird, dass zunächst die reibungsunterstützt formschlüssige Halterung des Ventilkolbens durch Lösen der geklemmten Kugeln gelöst wird und darauffolgend nach einer kurzen Verfahrstrecke des Käfigs der Käfig den Ventilkolben in seine andere Schaltstellung mitnimmt.

Bei der Verfahrbewegung des Käfigs nimmt dieser die Kugeln mit. Die reibungsunterstützt formschlüssig erreichte Positionierung des Ventilkolbens entspricht keiner exakt vorgebbaren Verfahrstellung des Ventilkolbens, insbesondere im Hinblick auf seine einzunehmenden Endstellungen, sondern es ist vielmehr jede Verfahrstellung des Ventilkolbens als "gehalten" anzusehen, in der ein ungewolltes Umschalten des Ventilkolbens mittels der Kugeln verhindert ist. So erhöht sich die Klemmkraftwirkung beim Halten des Ventilkolbens bei einer ungewollten Verfahrbewegung entgegen der Betätigungsrichtung und eine nachfolgende Betätigung wird dadurch erschwert.

DE 20 2006 014 780 U1 offenbart ein Pneumatik-Ventil zum Beherrschen von Luftströmen mit geringen Einsatzdrücken, mit einem linear verschiebbar in einem Ventilgehäuse angeordneten Ventilschieber und mit Haltemitteln zur lösbaren gehäusefesten Fixierung des Ventilschiebers in zwei durch das lineare Verschieben erreichten Schaltstellungen. Die Haltemittel weisen zumindest auf: einen den Ventilschieber querdurchsetzenden Aufnahmekanal, der mit zwei einander entgegengesetzten Kanalmündungen zum Außenumfang des Ventilschiebers ausmündet; zwei im Bereich der beiden Kanalmündungen in dem Aufnahmekanal angeordnete, in Längsrichtung des Aufnahmekanals im Wesentlichen unabhängig voneinander relativ zum Ventilschieber bewegliche Rastglieder in Form von Kugeln; eine in dem Aufnahmekanal zwischen den beiden Rastgliedern angeordnete und die beiden Rastglieder im Sinne eines Auseinanderhaltens beaufschlagende Druckfedereinrichtung; und zwei in Richtung der linearen Verschiebebewegung des Ventilschiebers bezüglich des Ventilgehäuses ortsfeste Rastvertiefungsanordnungen, jeweils in Form einer zum Ventilschieber koaxialen Ringnut, die an einer der zu fixierenden Schaltstellung entsprechenden Position im Bereich des Außenumfanges des Ventilschiebers angeordnet ist und mit der die beiden Rastglieder bei Erreichen der zu fixierenden Schaltstellung in lösbaren Rasteingriff gelangen können. Die einzelnen Rastpositionen sind axial zur Längsachse des Ventilschiebers gesehen voneinander beabstandet.

Bei einem Verschieben des Ventilschiebers werden die Rastkugelpaare entgegen der Federkraftwirkung aus der Rastposition heraus- und in den Aufnahmekanal hineingedrückt und gelangen nach Durchlaufen des axialen Verfahrweges federkraftbedingt in die neue Rastposition. Ist eine der beiden Schaltstellungen erreicht, verharrt der Ventilschieber in der entsprechenden Position auch dann, wenn die ihn in diese Rastposition gebrachte Stellkraft entfernt wird, die von einer Vorsteuerventileinrichtung aufgebracht wird. Der Ventilschieber bleibt also ohne ständige Energiezufuhr von außen in der jeweiligen Schaltstellung, bis er einen Umschaltimpuls erhält, wobei die in ihrer jeweiligen Raststellung federbelasteten Rastkugeln im Hinblick auf die relativ geringen Pneumatikkräfte am Ventilschieber ohne Weiteres verbleiben können.

Bei sehr hohen Fluidkräften, wie sie regelmäßig in der Hydraulik auftreten, dürfte sich die bekannte Lösung demgemäß als wenig geeignet erweisen.

Die DE 10 2015 225 858 A1 beschreibt eine Ventilvorrichtung mit den Merkmalen des Oberbegriffs des Anspruchs 1 mit einem Ventilgehäuse, in dem Fluidanschlussstellen vorgesehen sind und in dem mindestens ein Ventilkolben längsverfahrbar ist, der jeweils zumindest zwei der Fluidanschlussstellen in Abhängigkeit seiner Verfahrstellung entweder voneinander trennt oder miteinander verbindet, und mit mindestens einer Rasteinrichtung für jeden Ventilkolben zum wiederlösbaren Festlegen des jeweiligen Ventilkolbens in einer seiner Verfahrstellungen, die jeweils zumindest ein in eine Rastposition bringbares Rastmittel aufweist, wobei als Teil der jeweiligen Rasteinrichtung zum wiederlösbaren Festlegen des jeweiligen Ventilkolbens zumindest ein unabhängig von dem jeweiligen Ventilkolben bewegbarer Steuerkörper vorgesehen ist, der derart eingerichtet ist, dass dieser in zumindest einer Blockierstellung ein Verlassen der Rastposition des jeweiligen in der Rastposition angeordneten Rastmittels durch ein Blockieren des Rastmittels verhindert.

Weitere Ventilvorrichtungen gehen aus der US 3 088 489 und der DE 10 2016 213 820 B3 hervor.

Der Erfindung liegt die Aufgabe zugrunde, eine Ventilvorrichtung mit einer funktionssicheren wiederlösbaren Festlegung ihres Ventilkolbens auszustatten, die auch für auf den Ventilkolben wirkende hohe Kräfte, wie sie regelmäßig in der Hydraulik auftreten, geeignet ist.

Eine dahingehende Aufgabe löst eine Ventilvorrichtung mit den Merkmalen des Patentanspruches 1 in seiner Gesamtheit.

Gemäß dem kennzeichnenden Teil des Anspruchs 1 zeichnet sich die erfindungsgemäße Ventilvorrichtung dadurch aus, dass zwei Ventilkolben vorgesehen sind, auf deren voneinander abgewandten Stirnseiten jeweils eine Rasteinrichtung für den jeweils benachbarten Ventilkolben und eine Betätigungseinrichtung angeordnet sind, wobei die Ventilvorrichtung derart eingerichtet ist, dass, wenn die eine Betätigungseinrichtung aktiviert wird, diese die Rasteinrichtung ihres benachbarten Ventilkolbens von ihrem unverrasteten in ihren verrasteten Zustand und die Rasteinrichtung des anderen Ventilkolbens von ihrem verrasteten in ihren unverrasteten Zustand bringt, und umgekehrt.

Es ist ferner vorgesehen, dass als Teil der jeweiligen Rasteinrichtung zum wiederlösbaren Festlegen des jeweiligen Ventilkolbens zumindest ein unabhängig von dem jeweiligen Ventilkolben bewegbarer Steuerkörper vorgesehen ist, der derart eingerichtet ist, dass dieser in zumindest einer Blockierstellung ein Verlassen der Rastposition des jeweiligen in der Rastposition angeordneten Rastmittels durch ein Blockieren des Rastmittels verhindert.

In erfindungsgemäßer Weise ist zunächst erkannt worden, dass die Rasteinrichtung sich widersprechende Funktionen zu erfüllen hat. So ist die Rasteinrichtung idealerweise derart auszulegen, dass diese einerseits den Ventilkolben, auf den je nach Verwendung der Ventilvorrichtung hohe Kräfte wirken, in seiner jeweiligen wiederlösbaren Festlegestellung sicher fixiert hält, wodurch einem ungewollten Verfahren des Ventilkolbens entgegengewirkt wird, und dass diese andererseits bei einem gewollten Betätigen des Ventiles nebst Verfahren des Ventilkolbens diesen ohne großen Kraftaufwand für seine Verfahrbewegung freigibt. Diesen Bedingungen tragen die Merkmale des Patentanspruchs 1 in seiner Gesamtheit Rechnung. Eine auf den Ventilkolben wirkende hohe Kraft kann beispielsweise eine Fluid- und/oder Federkraft sein.

So ist eine von dem Ventilkolben, auf den je nach Verwendung der Ventilvorrichtung die hohen Kräfte wirken können, separate Rasteinrichtung vorgesehen, so dass die verrastete Festlegung des Ventilkolbens mittels einer Betätigungseinrichtung ohne gleichzeitiges Einwirken auf den Ventilkolben und ohne ein Lösen eines reibungsbasierenden Klemmens der Rastmittel in einer Art Vorsteuerung lösbar ist. Aufgrund dessen ist die von der Betätigungseinrichtung aufzubringende Betätigungskraft zum Lösen der Verrastung nicht direkt abhängig von den auf den Ventilkolben während des Betriebes der Ventilvorrichtung wirkenden Kräften. Zudem ist im Zustand der verrasteten Festlegung des Ventilkolbens die von der jeweiligen Rasteinrichtung aufgebrachte Haltekraft vollkommen reibungsunabhängig. Dadurch kann zumindest bei zeitweise auf den Ventilkolben einwirkenden hohen Kräften eine Betätigungseinrichtung gewählt werden, die weniger leistungsstark ist, als eine Betätigungseinrichtung, mittels der durch direkte Einwirkung auf den Ventilkolben die Verrastung zu lösen ist, was den Kostenaufwand für Energie und den Raumbedarf der Ventilvorrichtung reduzieren hilft. Im Ergebnis lässt sich dadurch der Einsatzbereich der erfindungsgemäßen Vorrichtung vergrößern. Da die Vorsteuerung und/oder die Haltewirkung jeweils zumindest teilweise ohne Federkraftunterstützung auskommen, ist die Betriebssicherheit erhöht, so dass die erfindungsgemäße Ventilvorrichtung auch besonders für sicherheitsrelevante Bereiche, wie Pressensteuerungen oder Betätigungseinrichtungen für Kraftwerksanlagen, einsetzbar ist.

Weitere Vorteile der erfindungsgemäßen Lösung sind Gegenstand der Unteransprüche.

Im Folgenden wird eine erfindungsgemäße Ventilvorrichtung anhand der Zeichnung näher erläutert. Dabei zeigen in prinzipieller und nicht maßstäblicher Darstellung die
- Fig. 1: einen schematisch vereinfachten Längsschnitt einer erfindungsgemäßen Ventilvorrichtung;
- Fig. 2: einen gegenüber Fig. 1 vergrößerten Teillängsschnitt der Ventilvorrichtung in dem in Fig. 1 mit X gekennzeichneten Bereich; und
- Fig. 3: einen gegenüber Fig. 1 vergrößerten Teillängsschnitt der Ventilvorrichtung in dem in Fig. 1 mit Y gekennzeichneten Bereich.

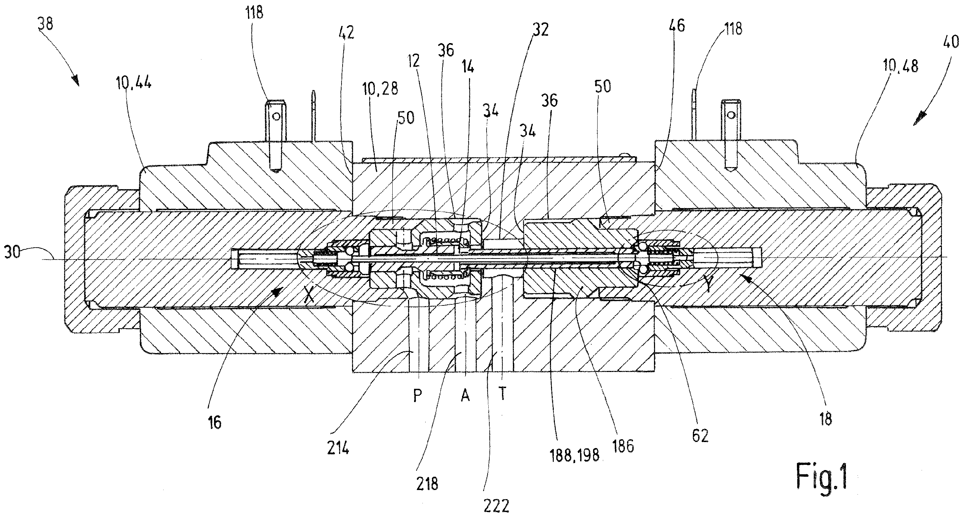

Fig. 1 zeigt eine erfindungsgemäße Ventilvorrichtung mit einem Ventilgehäuse 10, in dem Fluidanschlussstellen P, A, T vorgesehen sind und in dem ein erster 12 und ein zweiter 14 Ventilkolben längsverfahrbar ist. Zwei der Fluidanschlussstellen P, A, T sind in Abhängigkeit der Verfahrstellung des jeweiligen Ventilkolbens 12, 14 entweder voneinander trennbar oder miteinander verbindbar. Die Ventilvorrichtung weist zudem eine erste Rasteinrichtung 16 für den ersten Ventilkolben 12 und eine zweite Rasteinrichtung 18 für den zweiten Ventilkolben 14 auf, jeweils zum wiederlösbaren Festlegen des jeweiligen Ventilkolbens 12, 14 in einer seiner Verfahrstellungen. Jede Rasteinrichtung 16, 18 weist Rastmittel 20 auf, die in eine Rastposition 22 bringbar sind.

Als Teil der jeweiligen Rasteinrichtung 16, 18 ist zum wiederlösbaren Festlegen des jeweiligen Ventilkolbens 12, 14 zumindest ein unabhängig von dem jeweiligen Ventilkolben 12, 14 bewegbarer erster Steuerkörper 24 vorgesehen, der derart eingerichtet ist, dass dieser in zumindest einer Blockierstellung ein Verlassen der Rastposition 22 der jeweiligen in der Rastposition 22 angeordneten Rastmittel 20 durch ein Blockieren der Rastmittel 20 verhindert.

Das Ventilgehäuse 10 weist ein Hauptgehäuseteil 28 auf, in dem die beiden Ventilkolben 12, 14 entlang ein und derselben Längsachse 30 verfahrbar sind. Durch das Hauptgehäuseteil 28 erstreckt sich in Längsrichtung 30 der Ventilkolben 12, 14 ein Durchgang 32, dessen Innendurchmesser jeweils unter Ausbildung einer Stufe 34 in Richtung einer ersten 38 und einer zweiten 40 Betätigungseinrichtung erweitert ist.

Als Teil des Ventilgehäuses 10 schließt sich auf der einen Seite 42 des Hauptgehäuseteils 28 ein Gehäuse 44 der ersten Betätigungseinrichtung 38 und auf der der einen Seite 42 gegenüberliegenden anderen Seite 46 ein Gehäuse 48 der zweiten Betätigungseinrichtung 40 an, jeweils zur Betätigung eines der Ventilkolben 12, 14 und jeder Rasteinrichtung 16, 18. Die beiden Betätigungseinrichtungen 38, 40 entsprechen sich und sind jeweils als Magnetbetätigungseinrichtung ausgebildet. Das Gehäuse 44, 48 der jeweiligen Betätigungseinrichtung 38, 40 weist auf seiner dem Hauptgehäuseteil 28 zugewandten Seite einen zylindrischen Fortsatz 50 auf, der sich in Richtung des Hauptgehäuseteils 28 erstreckt und im Wesentlichen einen Außendurchmesser 51 entsprechend dem Innendurchmesser 52 der jeweiligen Durchgangserweiterung 36 des Hauptgehäuseteils 28 aufweist. Über eine Gewindestrecke 54 zwischen dem Außenumfang 51 des zylindrischen Fortsatzes 50 des Gehäuses 44, 48 der jeweiligen Betätigungseinrichtung 38, 40 und der jeweiligen Durchgangserweiterung 36 des Hauptgehäuseteils 28 ist das Gehäuse 44, 48 der jeweiligen Betätigungseinrichtung 38, 40 an dem Hauptgehäuseteil 28 festgelegt. Ausgehend von einer dem Hauptgehäuseteil 28 zugewandten Stirnseite 56 des Fortsatzes 50 des Gehäuses 44, 48 der jeweiligen Betätigungseinrichtung 38, 40 ist in den Fortsatz 50 eine zylindrische Ausnehmung 58 eingebracht, die sich koaxial zur Längsachse 30 der Ventilkolben 12, 14 erstreckt. Der Innendurchmesser 60 der jeweiligen zylindrischen Ausnehmung 58 verringert sich unter Ausbildung einer ersten 62 und einer zweiten 64 Stufe ausgehend von der den Ventilkolben 12, 14 zugewandten Öffnung 66 der Ausnehmung 58 in Richtung von den Ventilkolben 12, 14 weg.

Die Ausnehmung 58 des Gehäuses 44, 48 der jeweiligen Betätigungseinrichtung 38, 40 und die jeweilige Durchgangserweiterung 36 des Hauptgehäuseteils 28 begrenzen jeweils einen Raum 68, in denen auf gegenüberliegenden Stirnseiten 70, 72 der Ventilkolben 12, 14 jeweils die erste 16 bzw. die zweite 18 Rasteinrichtung angeordnet ist, wobei die zweite Rasteinrichtung 18, an einer sich senkrecht zu der Längsachse 30 der Ventilkolben 12, 14 erstreckenden Ebene gespiegelt, der ersten Rasteinrichtung 16 entspricht. Stellvertretend für beide, einander entsprechenden Kombinationen aus Betätigungs- 38, 40 und Rasteinrichtung 16, 18 wird nun eine jeweilige Kombination aus Betätigungs- 38, 40 und Rasteinrichtung 16, 18 näher erläutert:
In stirnseitiger Anlage mit der zweiten Stufe 64 des Gehäuses 44, 48 der Betätigungseinrichtung 38, 40 ist ein hülsenförmig ausgebildeter zweiter Steuerkörper 74, der stationär im Gehäuse 44, 48 der Betätigungseinrichtung 38, 40 angeordnet ist. Die axiale Länge des zweiten Steuerkörpers 74 entspricht dem axialen Abstand zwischen erster 62 und zweiter 64 Stufe der Ausnehmung 58 des Gehäuses 44, 48 der Betätigungseinrichtung 38, 40. Der zweite Steuerkörper 74 weist im Wesentlichen einen Außendurchmesser 76 auf, der dem Innendurchmesser 76 der Ausnehmung 58 des Fortsatzes 50 im Bereich zwischen der ersten 62 und der zweiten 64 Stufe entspricht. An seinem den Ventilkolben 12, 14 zugewandten Endbereich weist der zweite Steuerkörper 74 auf seiner Innenumfangsseite als Widerlager eine Anschlagfläche 80 für die Rastmittel 20 auf, die Teil einer bis zu seinem den Ventilkolben 12, 14 zugewandten Ende durchgehenden Erweiterung 78 des Innendurchmessers des zweiten Steuerkörpers 74 in Richtung der Ventilkolben 12, 14 ist. Die Anschlagfläche 80 ist in ihrer Dimension an die Kontur eines als Kugel ausgebildeten Rastmittels 20 angepasst. In Richtung der Längsachse 30 der Ventilkolben 12, 14 gesehen, ist das Verhältnis der Länge des innenumfangserweiterungsfreien Bereiches des zweiten Steuerkörpers 74 zu der Länge des Bereiches seiner Innendurchmesser-erweiterung 78 in etwa 3,5 zu 1.

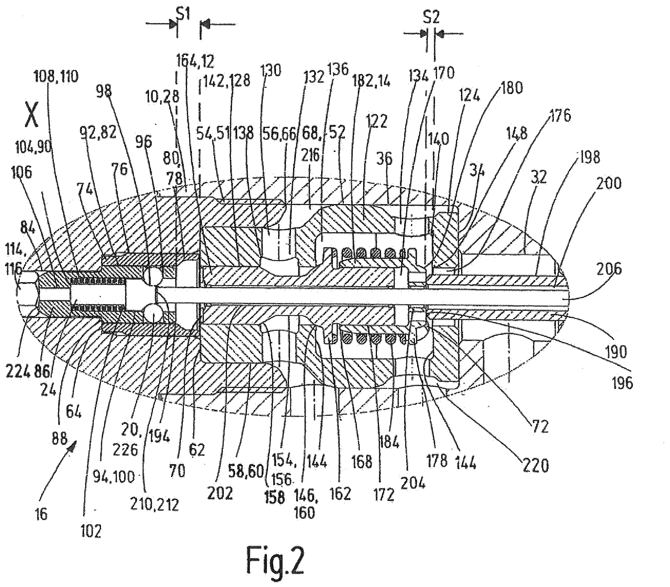

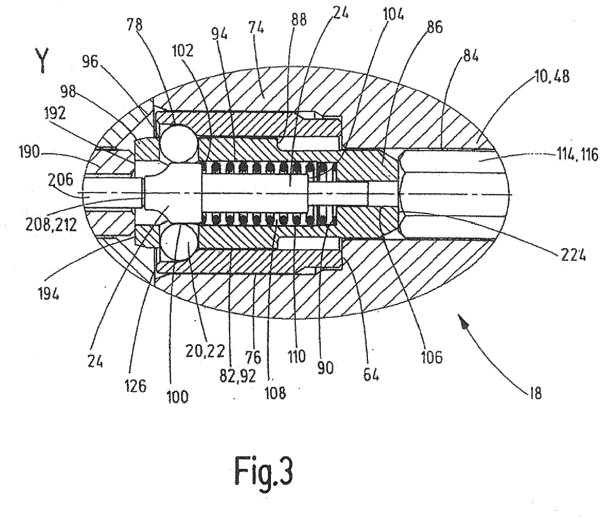

An dem Innenumfang des zweiten Steuerkörpers 74 im Bereich seines kleinsten Innendurchmessers 82 und an dem Innenumfang 84 der Ausnehmung 58 des Gehäuses 44, 48 der Betätigungseinrichtung 38, 40 im Bereich ausgehend von seiner zweiten Stufe 64 in Richtung von den Ventilkolben 12, 14 weg ist eine hohlzylindrische Führungshülse 86 verfahrbar geführt. In Richtung von den Ventilkolben 12, 14 weg verringert sich der Außenumfang der Führungshülse 86 in ihrem Mittenbereich unter Ausbildung einer Stufe 88 und an ihrem den Ventilkolben 12, 14 abgewandten Endbereich konisch verjüngend. In Richtung der Längsachse 30 der Ventilkolben 12, 14 gesehen, ist die Länge der Führungshülse 86 zwischen ihrer außenumfangsseitigen Stufe 88 und ihrem den Ventilkolben 12, 14 zugewandten Ende in etwa so lang wie der innenumfangserweiterungsfreie Bereich des zweiten Steuerkörpers 74. In Richtung zu den Ventilkolben 12, 14 hin verringert sich der Außenumfang der Führungshülse 86 an ihrem den Ventilkolben 12, 14 zugewandten Endbereich konisch verjüngend. In Fig. 2 ist die Führungshülse 86 der ersten Rasteinrichtung 16 in ihrer den Ventilkolben 12, 14 entferntest liegenden Endstellung angeordnet, so dass die außenumfangsseitige Stufe 88 dieser Führungshülse mit der zweiten Stufe 64 des Gehäuses 44 der Betätigungseinrichtung 38 in Anlage ist. Gleichzeitig ist, wie in Fig. 3 gezeigt, die außenumfangsseitige Stufe 88 der Führungshülse 86 der zweiten Rasteinrichtung 18 von der zweiten Stufe 64 des Gehäuses 48 der Betätigungseinrichtung 40 abgehoben. An ihrem den Ventilkolben 12, 14 abgewandten Endbereich weist die Führungshülse 86 in Richtung von den Ventilkolben 12, 14 weg unter Ausbildung einer Stufe 90 eine Verringerung ihres Innenumfangs auf. An ihrem den Ventilkolben 12, 14 zugewandten Endbereich, in dem die Führungshülse 86 ihren größten Außen-92 und Innendurchmesser 94 aufweist, weist die Führungshülse 86 sich in Radialrichtung durch die Führungshülse 86 hindurch erstreckende Durchgänge 96 auf. Die Durchgänge 96 sind über den Umfang der Führungshülse 86 verteilt angeordnet. Der kleinste Innendurchmesser eines jeweiligen Durchgangs 96 ist geringfügig größer und die radiale Wandstärke der Führungshülse 86 im Bereich der Durchgänge 96 ist kleiner als der größte Durchmesser eines einzelnen Rastmittels 20 in Form einer Kugel, das in einem jeweiligen Durchgang 96 geführt angeordnet ist.

In der Führungshülse 86 ist der rotationssymmetrische erste Steuerkörper 24 verfahrbar geführt. Der erste Steuerkörper 24 weist an seinem den Ventilkolben 12, 14 zugewandten Endbereich in Richtung der Ventilkolben 12, 14 eine vollumfängliche und trichterförmige Außenumfangsverringerung auf, die im Längsschnitt gesehen im Wesentlichen als Teilkreis ausgebildet ist. Der Radius des Teilkreises entspricht in etwa dem halben Durchmesser eines als Kugel ausgebildeten Rastmittels 20. Durch diese Außenumfangsverringerung wird eine Steuerfläche 98 des ersten Steuerkörpers 24 für die Rastmittel 20 ausgebildet. An die Steuerfläche 98 des ersten Steuerkörpers 24 in Richtung von den Ventilkolben 12, 14 weg sich anschließend, weist der erste Steuerkörper 24 zunächst seinen vollen Außendurchmesser 100 auf, der sich unter Ausbildung einer ersten 102 und einer zweiten 104 Stufe in Richtung von den Ventilkolben 12, 14 weg verringert. In Richtung der Längsachse 30 der Ventilkolben 12, 14 gesehen, ist die Länge des Bereichs 100 des ersten Steuerkörpers 24, in dem dieser den vollen Außendurchmesser 100 aufweist, geringfügig kleiner als der kleinste Durchmesser eines einzelnen radialen Durchganges 96 durch die Führungshülse 86 zur Aufnahme eines einzelnen Rastmittels 20. Der erste Steuerkörper 24 ist in dem Bereich 100 seines vollen Außendurchmessers 100 sowie in dem Bereich zwischen seiner zweiten Stufe 104 und seinem den Ventilkolben 12, 14 abgewandten Ende in der Führungshülse 86 im Bereich ihres größten 94 bzw. ihres kleinsten 106 Innendurchmessers geführt. Im Bereich zwischen seiner ersten 102 und zweiten 104 Stufe ist der erste Steuerkörper 24 unter Ausbildung eines Ringraumes 108 von dem Innenumfang der Führungshülse 86 im Bereich ihres größten Innendurchmessers 94 beabstandet angeordnet. In dem Ringraum 108 ist ein Energiespeicher in Form einer ersten Druckfeder 110 vorgesehen, durch die sich der erste Steuerkörper 24 hindurch erstreckt und die sich mit ihrem einen Ende an der ersten Stufe 102 des ersten Steuerkörpers 24 und mit ihrem anderen Ende an der innenumfangsseitigen Stufe 90 der Führungshülse 86 abstützt. Dadurch ist der erste Steuerkörper 24 in Richtung der Ventilkolben 12, 14 vorgespannt.

Die Betätigungseinrichtung 38, 40 weist einen bestrombaren Betätigungsmagneten auf, der auf eine Betätigungsstange 114 eines mehrteiligen Gestängetriebes 116 einwirkt. Auf der Oberseite des Gehäuses 44, 48 der Betätigungseinrichtung 38, 40 sind mit dem Betätigungsmagneten elektrisch verbundene Steckerteile 118 vorgesehen, über die der Betätigungsmagnet bestrombar ist. Die Betätigungsstange 114 ist an dem Innenumfang 84 der Ausnehmung 58 des Gehäuses 44, 48 der Betätigungseinrichtung 38, 40 geführt, in einem Bereich ausgehend von der zweiten Stufe 64 der Ausnehmung 58 in Richtung von den Ventilkolben 12, 14 weg.

In dem von der ersten Betätigungseinrichtung 38 und dem Hauptgehäuseteil 28 begrenzten Raum 68 ist ein im Wesentlichen rotationssymmetrisches glockenförmiges erstes Einsatzgehäuseteil 122 aufgenommen. Das erste Einsatzgehäuseteil 122 weist in seinem Mittenbereich seinen größten Außendurchmesser 52 auf, der in Anlage ist mit dem Innendurchmesser 52 der Durchgangserweiterung 36 des Hauptgehäuseteils 28, und weist in seinem der ersten Rasteinrichtung 16 zugewandten Endbereich seinen kleinsten Außendurchmesser 60 auf, der in Anlage ist mit dem Innendurchmesser 60 der Ausnehmung 58 des Fortsatzes 50 des Gehäuses 44 der ersten Betätigungseinrichtung 38 im Bereich zwischen dessen erster Stufe 62 und dessen Öffnung 66. An seinem der zweiten Rasteinrichtung 18 zugewandten Endbereich 124 ist das erste Einsatzgehäuseteil 122 von dem Innendurchmesser 52 der Durchgangserweiterung des Hauptgehäuseteils 28 beabstandet angeordnet, wobei der Außendurchmesser dieses Endbereiches des ersten Einsatzgehäuseteils 122 kleiner und größer ist als sein größter 52 bzw. kleinster 60 Außendurchmesser. Die der ersten Rasteinrichtung 16 zugewandte Stirnseite 62 des ersten Einsatzgehäuseteils 122 ist in Anlage mit der ersten Stufe 62 der Ausnehmung 58 des Gehäuses 44 der ersten Betätigungseinrichtung 38 und der den Ventilkolben 12, 14 zugewandten Stirnseite 126 des zweiten Steuerkörpers 74 der ersten Rasteinrichtung 16. Die der zweiten Rasteinrichtung 18 zugewandte Stirnseite 34 des ersten Einsatzgehäuseteils 122 ist in Anlage mit der Stufe 34 des Durchganges 32 des Hauptgehäuseteils 28.

Das erste Einsatzgehäuseteil 122 weist einen sich in Axialrichtung 30 erstreckenden, zentralen Durchgang 128 auf. In Radialrichtung und in Richtung der in den Figuren dargestellten Schnittebene erstrecken sich im Bereich des kleinsten Außendurchmessers 60 des ersten Einsatzgehäuseteils 122 einander gegenüberliegend, zwei erste Querkanäle 130 in das erste Einsatzgehäuseteil 122 hinein, deren jeweilige Öffnung am Außenumfang des ersten Einsatzgehäuseteiles 122 von dem Fortsatz 50 des Gehäuses 44 der ersten Betätigungseinrichtung 38 unverdeckt ist und die jeweils in einem ersten Fluidraum 132 in dem ersten Einsatzgehäuseteil 122 ausmünden. Zumindest in Radialrichtung und in Richtung der in den Figuren dargestellten Schnittebene erstrecken sich in dem der zweiten Rasteinrichtung 18 zugewandten Endbereich des ersten Einsatzgehäuseteils 122 einander gegenüberliegend zwei zweite Querkanäle 134 in das erste Einsatzgehäuseteil 122 hinein, die jeweils in einem Steuerraum 136 in dem ersten Einsatzgehäuseteil 122 ausmünden. Der erste Fluidraum 132 und der Steuerraum 136 sind als Teil des Durchganges 128 durch das erste Einsatzgehäuseteil 122 koaxial zur Längsachse 30 der Ventilkolben 12, 14 angeordnet und weisen einen Innendurchmesser 138, 140 auf, der größer ist als der kleinste konstante Innendurchmesser 142 des ersten Einsatzgehäuseteils 122 zwischen diesen Räumen 132, 136 und außerhalb dieser Räume 132, 136. Der Übergang der der ersten 16 und zweiten 18 Rasteinrichtung zugewandten Innenwand 144 des Steuerraumes 136 zu dem kleinsten Innendurchmesser 142 des Durchgangs 128 des ersten Einsatzgehäuseteils 122 bildet eine erste 146 bzw. zweite 148 ringförmige Steuerkante aus, die jeweils als Ventilsitz eines ersten und zweiten Sitzventils dienen.

Der erste Ventilkolben 12 ist mit seinem der ersten Rasteinrichtung 16 zugewandten Endbereich an dem kleinsten Innendurchmesser 142 des Durchgangs 128 des ersten Einsatzgehäuseteils 122 geführt, in dessen der ersten Rasteinrichtung 16 zugewandten Endbereich. In seinem Mittenbereich weist der erste Ventilkolben 12 eine im Längsschnitt gesehen wannenförmige Ausnehmung 154 auf, die eine parallel zur Längsachse 30 ausgerichtete Grundseite 156 und sich von jedem Ende der Grundseite 156 in Radialsowie in Axialrichtung 30 nach außen wegerstreckende Seitenwandteile 158 aufweist. In Richtung der zweiten Rasteinrichtung 18 schließt sich an das der zweiten Rasteinrichtung zugewandte Seitenwandteil 158 der Ausnehmung 154 des ersten Ventilkolbens 12 eine Durchmessererweiterung an, die zunächst in Radial- sowie in Axialrichtung 30 nach außen verlaufend, eine Steuerkante 160 und darauffolgend einen sich in Radialrichtung nach außen wegerstreckenden vollumfänglichen Vorsprung 162 des ersten Ventilkolbens 12 ausbildet. Der erste Ventilkolben 12 erstreckt sich durch den ersten Fluidraum 132 und den Durchgang 128 im Bereich seines kleinsten Innendurchmessers 142 zwischen dem ersten Fluidraum 132 und dem Steuerraum 136 hindurch in den Steuerraum 136 hinein, in dem die Steuerkante 160 und der Vorsprung 162 des ersten Ventilkolbens 12 angeordnet ist. Derart ausgebildet dient der erste Ventilkolben 12 als Ventilschließkörper 164 des ersten Sitzventils.

In dem Steuerraum 136 ist der topfförmige zweite Ventilkolben 14 angeordnet, der auf dem der zweiten Rasteinrichtung 18 zugewandten Endbereich des Außenumfangs des ersten Ventilkolbens 12 geführt ist. Dazu ist in die der ersten Rasteinrichtung 16 zugewandte Stirnseite 168 des zweiten Ventilkolbens 14 eine zylindrische Ausnehmung 170 eingebracht, deren Innendurchmesser 172 im Wesentlichen dem Außendurchmesser 172 des ersten Ventilkolbens 12 in seinem der zweiten Rasteinrichtung 18 zugewandten Endbereich entspricht. Durch die der zweiten Rasteinrichtung 18 zugewandte Stirnseite 72 des zweiten Ventilkolbens 14 erstreckt sich eine dezentrale und koaxial zur Längsachse 30 ausgerichtete Durchgangsanordnung 176, die durch auf einem fiktiven Kreis angeordnete, einzelne Durchgangssegmente gebildet ist. Die Durchgangsanordnung 176 dient zum Druckausgleich zwischen der Innen- und Außenseite des zweiten Ventilkolbens 14. In dem der zweiten Rasteinrichtung 18 zugewandten Endbereich seines Außenumfangs weist der zweite Ventilkolben 14 einen sich in Radialrichtung nach außen wegerstreckenden, vollumfänglichen Vorsprung 178 auf. Sich in Richtung der zweiten Rasteinrichtung 18 an den Vorsprung 178 anschließend, weist der zweite Ventilkolben 14 eine Verringerung des Außendurchmessers auf, die eine Steuerkante 180 des zweiten Ventilkolbens 14 ausbildet. Derart ausgebildet dient der zweite Ventilkolben 14 als Ventilschließkörper 182 des zweiten Sitzventils.

Zwischen den Vorsprüngen 162, 178 der Ventilkolben 12, 14 ist ein Energiespeicher in Form einer zweiten Druckfeder 184 angeordnet, die sich mit ihrem einen und anderen Ende an dem Vorsprung 162, 178 des ersten 12 bzw. des zweiten 14 Ventilkolbens abstützt. Dadurch ist der jeweilige Ventilkolben 12, 14 als Ventilschließkörper 164, 182 in Richtung seines jeweiligen Ventilsitzes 146, 148 vorgespannt, der an dem ersten Einsatzgehäuseteil 122 angeformt ist.

In dem von der zweiten Betätigungseinrichtung 40 und dem Hauptgehäuseteil 28 begrenzten Raum 68 ist ein rotationssymmetrisches zweites Einsatzgehäuseteil 186 aufgenommen. Die der zweiten Rasteinrichtung 18 zugewandte Stirnseite 62 des zweiten Einsatzgehäuseteils 186 ist in Anlage mit der ersten Stufe 62 der Ausnehmung 58 des Gehäuses 48 der zweiten Betätigungseinrichtung 40 und die der ersten Rasteinrichtung 16 zugewandte Stirnseite 34 des zweiten Einsatzgehäuseteils 186 ist in Anlage mit der der zweiten Rasteinrichtung 18 zugewandten Stufe 34 des Durchganges 32 des Hauptgehäuseteils 28.

Das zweite Einsatzgehäuseteil 186 weist einen zentralen Durchgang 188 auf, in dem ein Ventilvorsteuerkolben 190 geführt ist. In Fig. 1 ist die eine Stirnseite 192 des Ventilvorsteuerkolbens 190 mit der der ersten Rasteinrichtung 16 zugewandten Stirnseite 194 der Führungshülse 86 der zweiten Rasteinrichtung 18 (Fig. 3) und die andere Stirnseite 196 des Ventilvorsteuerkolbens 190 mit der der zweiten Rasteinrichtung 18 zugewandten Stirnseite 72 des zweiten Ventilkolbens 14 (Fig. 2) in Anlage. Der Außendurchmesser 198 des Ventilvorsteuerkolbens 190 ist größer als der volle bzw. größte Außendurchmesser 100 der ersten Steuerkörper 24 und der größte Innendurchmesser der Führungshülsen 86.

Die beiden Ventilkolben 12, 14 und der Ventilvorsteuerkolben 190 weisen jeweils einen zentralen Durchgang 200, 202, 204 auf, durch den sich jeweils ein und dieselbe Steuerstange 206 des Gestängetriebes 116 erstreckt. Der Innendurchmesser des Durchgangs 200 des Ventilvorsteuerkolbens 190 ist kleiner als der größte Außendurchmesser 100 der ersten Steuerkörper 24. Die Steuerstange 206 ist unabhängig von den beiden Ventilkolben 12, 14 und dem Ventilvorsteuerkolben 190 in Relation zu diesen verfahrbar. Die eine Stirnseite 208 der Steuerstange 206 ist mit der der ersten Rasteinrichtung 16 zugewandten Stirnseite 212 des ersten Steuerkörpers 24 der zweiten Rasteinrichtung 18 und die andere Stirnseite 210 der Steuerstange 206 ist mit der der zweiten Rasteinrichtung 18 zugewandten Stirnseite 212 des ersten Steuerkörpers 24 der ersten Rasteinrichtung 16 in Anlage oder einteilig mit den ersten Steuerkörpern 24 ausgebildet.

In Fig. 2 beschreibt S1 den Verfahrweg jeder Führungshülse 86 zwischen ihrer den Ventilkolben 12, 14 entferntest angeordneten Endstellung und ihrer auf den jeweiligen Ventilkolben 12, 14 mittelbar oder unmittelbar einwirkenden Stellung, in der die Führungshülse 86 den Ventilkolben 12, 14 entgegen der Wirkung der Druckfeder 184 von seinem Ventilsitz 146, 148 abhebt. S2 beschreibt den Verfahrweg des jeweils anderen Ventilkolbens 12, 14 zwischen seiner von seinem Ventilsitz 146, 148 abgehobenen Endstellung und seinem Ventilsitz 146, 148 und/oder den Verfahrweg dieser Führungshülse 86 zwischen ihrer auf den jeweiligen Ventilkolben 12, 14 mittelbar oder unmittelbar einwirkenden Stellung, in der die Führungshülse 86 den Ventilkolben 12, 14 entgegen der Wirkung der Druckfeder 184 von seinem Ventilsitz 146, 148 abhebt, und ihrer Blockierstellung.

Das Verhältnis von S1 zu S2 wird vorliegend als Überdeckung definiert. In Fig. 2 ist S1 in Bezug auf die Führungshülse 86 der ersten Rasteinrichtung 16 größer als S2 in Bezug auf den zweiten Ventilkolben 14, so dass eine positive Überdeckung vorliegt. Genauso ist das Verhältnis von S1 in Bezug auf die Führungshülse 86 der zweiten Rasteinrichtung 18 größer als S2 in Bezug auf den ersten Ventilkolben 12. Auch denkbar ist jedoch, dass jeweils die Überdeckung bei einem Verhältnis von 1 gleich null oder bei einem Verhältnis kleiner 1 negativ ist.

Bei einer positiven Überdeckung ist die Ventilvorrichtung derart eingerichtet, dass der jeweilige eine Ventilkolben 12, 14 mit seinem Ventilsitz 146, 148 in Anlage gelangt bevor der jeweils andere Ventilkolben 12, 14 von seinem Ventilsitz 146, 148 abhebt, so dass zu keinem Zeitpunkt beide Ventilkolben 12, 14 gleichzeitig von ihrem Ventilsitz 146, 148 abgehoben sind. Dadurch wird verhindert, dass sämtliche Fluidanschlussstellen P, A, T in einer Übergangsstellung während eines Schaltvorgangs zumindest kurzzeitig miteinander fluidführend verbunden werden, wodurch ein dahingehender Energieverlust aufgrund eines Fluiddruckabbaus zum Rücklaufanschluss T hin unmöglich wird.

In Radialrichtung und in Richtung der in den Figuren gezeigten Schnittebene erstrecken sich durch den Hauptgehäuseteil 28 ein erster Fluidkanal 214 zwischen einem Druckversorgungsanschluss P an dem Hauptgehäuseteil 28 und einem mit den ersten Querkanälen 130 verbundenen dritten Fluidraum 216 und ein zweiter Fluidkanal 218 zwischen einem Arbeitsanschluss A an dem Hauptgehäuseteil 28 zu einem mit den zweiten Querkanälen 134 verbundenen vierten Fluidraum 220, die beide in dem Raum 68 angeordnet sind, der durch die erste Betätigungseinrichtung 38 und das Hauptgehäuseteil 28 begrenzt ist. Der dritte Fluidraum 216 ist durch die Außenseite des ersten Einsatzgehäuseteils 122, den Innenumfang der Durchgangserweiterung 36 des Hauptgehäuseteils 28 und die der zweiten Rasteinrichtung 18 zugewandte Stirnseite 56 des Fortsatzes 50 des Gehäuses 44 der ersten Betätigungseinrichtung 38 begrenzt. Der vierte Fluidraum 220 ist durch den Innenumfang der Durchgangserweiterung 36 des Hauptgehäuseteils 28, die Stufe 34 der Durchgangserweiterung 36 und die Außenseite des ersten Einsatzgehäuseteils 122 begrenzt. Zudem erstreckt sich in Radialrichtung und in Richtung der in den Figuren gezeigten Schnittebene durch den Hauptgehäuseteil 28 ein dritter Fluidkanal 222 zwischen einem Rücklaufanschluss T, insbesondere Tankanschluss, an dem Hauptgehäuseteil 28 und einem durch den Durchgang 32 des Hauptgehäuseteils 28 im Bereich seines kleinsten Innendurchmessers sowie durch die beiden Einsatzgehäuseteile 122, 186 mitbegrenzten fünften Fluidraum.

Die mit den Rastmitteln 20 in Kontakt kommenden Komponenten der Ventilvorrichtung können reibungsarme Oberflächen aufweisen oder mit reibungsarmen Materialien beschichtet sein, wodurch eine dauerhaft leichte und verschleißarme Betätigung der jeweiligen Rasteinrichtung 16, 18 ohne jedwede Einbuße der Betriebssicherheit gewährleistet ist.

Im Folgenden wird die Funktion der erfindungsgemäßen Ventilvorrichtung näher beschrieben:
In Fig. 1 ist die erste Rasteinrichtung 16 in ihrem unverrasteten Zustand (Fig. 2) und die zweite Rasteinrichtung 18 in ihrem verrasteten Zustand (Fig. 3) gezeigt.

Dabei ist die außenumfangsseitige Stufe 88 der Führungshülse 86 der zweiten Rasteinrichtung 18 von der zweiten Stufe 64 der Ausnehmung 58 des Gehäuses 48 der zweiten Betätigungseinrichtung 40 abgehoben. Die der ersten Rasteinrichtung 16 zugewandte Stirnseite 194 der Führungshülse 86 der zweiten Rasteinrichtung 18 ist in Anlage mit der einen Stirnseite 192 des Ventilvorsteuerkolbens 190, der mit seiner anderen Stirnseite 196 den zweiten Ventilkolben 14 entgegen der Kraft der zweiten Druckfeder 184 von seinem Ventilsitz 148 abhebt. Der erste Ventilkolben 12 ist zeitgleich unter der Kraft der zweiten Druckfeder 184 vorgespannt, mit seinem Ventilsitz 146 in Anlage.

Zudem ist die zweite Stufe 104 des ersten Steuerkörpers 24 der zweiten Rasteinrichtung 18 unter der Wirkung der ersten Druckfeder 110 von der innenumfangsseitigen Stufe 90 der Führungshülse 86 der zweiten Rasteinrichtung 18 abgehoben. Die der ersten Rasteinrichtung 16 zugewandte Stirnseite 212 des ersten Steuerkörpers 24 der zweiten Rasteinrichtung 18 ist in Anlage mit der einen Stirnseite 208 der Steuerstange 206, die mit ihrer anderen Stirnseite 210 in Anlage ist mit der der zweiten Rasteinrichtung 18 zugewandten Stirnseite 212 des ersten Steuerkörpers 24 der ersten Rasteinrichtung 16. Die zweite Stufe 104 des ersten Steuerkörpers 24 der ersten Rasteinrichtung 16 ist entgegen der Wirkung der ersten Druckfeder 110 in Anlage mit der innenumfangsseitigen Stufe 90 der Führungshülse 86 der ersten Rasteinrichtung 16, die in ihrer den Ventilkolben 12, 14 entferntest angeordneten Endstellung mit ihrer außenumfangsseitigen Stufe 88 in Anlage mit der zweiten Stufe 64 der Ausnehmung 58 des Gehäuses 44 der ersten Betätigungseinrichtung 38 ist.

Bei der in einer ihrer Freigabestellungen angeordneten ersten Rasteinrichtung 16 ragt die in ihrer Freigabeposition 226 angeordnete jeweilige Kugel 20 in Radialrichtung nach innen, an der Steuerfläche 98 des ersten Steuerkörpers 24 der ersten Rasteinrichtung 16 anliegend, in den Hohlraum der Führungshülse 86 der ersten Rasteinrichtung 16 hinein, so dass der erste Steuerkörper 24 in Relation zu der Führungshülse 86 zwischen der innenumfangsseitigen Stufe 90 der Führungshülse 86 der ersten Rasteinrichtung 16 und den Kugeln 20 festgelegt ist. Zudem ist eine Bewegung der jeweiligen Kugel 20 in Radialrichtung nach außen durch den Innenumfang des zweiten Steuerkörpers 74 der ersten Rasteinrichtung 16 im Bereich seines kleinsten Innendurchmessers 82 begrenzt, so dass die jeweilige Kugel 20 in der in den Hohlraum der Führungshülse 86 der ersten Rasteinrichtung 16 hineinragenden Freigabeposition 226 blockiert gehalten ist und die Führungshülse 86 zusammen mit dem ersten Steuerkörper 24 für eine Verfahrbewegung in dem zweiten Steuerkörper 74 freigegeben ist.

Bei der in ihrer Blockierstellung angeordneten zweiten Rasteinrichtung 18 ragt die in ihrer Rastposition 22 angeordnete jeweilige Kugel 20 in Radialrichtung nach außen, an der Anschlagfläche 80 des zweiten Steuerkörpers 74 der zweiten Rasteinrichtung 18 anliegend, über den Außenumfang der Führungshülse 86 im Bereich ihres größten Außendurchmessers 92 hervor, so dass die Führungshülse 86 der zweiten Rasteinrichtung 18 zumindest für eine Verfahrbewegung in Richtung von den Ventilkolben 12, 14 weg gesperrt ist, die über den Ventilvorsteuerkolben 190 den zweiten Ventilkolben 14 entgegen der Kraft der zweiten Druckfeder 184 von seinem Ventilsitz 148 abhebt. Zudem ist eine Bewegung der jeweiligen Kugel 20 in Radialrichtung nach innen durch den Außenumfang des ersten Steuerkörpers 24 der zweiten Rasteinrichtung 18 im Bereich seines größten Außendurchmessers 100 begrenzt, so dass die jeweilige Kugel 20 in ihrer über den Außenumfang der Führungshülse 86 der zweiten Rasteinrichtung 18 hervorragenden Rastposition 22 blockiert gehalten ist. Gleichzeitig ist der erste Steuerkörper 24 der zweiten Rasteinrichtung 18 für eine Verfahrbewegung in der Führungshülse 86 der zweiten Rasteinrichtung 18 zwar freigegeben, jedoch durch die erste Druckfeder 110 in seine Blockierstellung vorgespannt.

Bei dieser Anordnung der Ventilkolben 12, 14 ist der Arbeitsanschluss A fluidführend mit dem Rücklaufanschluss T verbunden, die beide von dem Druckversorgungsanschluss P getrennt sind.

Soll ausgehend von der in Fig. 1 gezeigten Anordnung der beiden Ventilkolben 12, 14 der zweite Ventilkolben 14 in Anlage mit seinem Ventilsitz 148 gebracht und der erste Ventilkolben 12 von seinem Ventilsitz 146 abgehoben werden, wird der Betätigungsmagnet der ersten Betätigungseinrichtung 38 bestromt, der auf die Betätigungsstange 114 einwirkt und in Richtung der zweiten Betätigungseinrichtung 40 ausfährt. Dabei wirkt die Betätigungsstange 114 auf die den Ventilkolben 12, 14 abgewandte Stirnseite 224 der Führungshülse 86 der ersten Rasteinrichtung 16, die, mit ihrer innenumfangsseitigen Stufe 90 in Anlage mit der zweiten Stufe 104 des ersten Steuerkörpers 24 der ersten Rasteinrichtung 16, den ersten Steuerkörper 24 der ersten Rasteinrichtung 16 in Richtung der zweiten Betätigungseinrichtung 40 mitnimmt bis die Führungshülse 86 der ersten Rasteinrichtung 16 mit ihrer den Ventilkolben 12, 14 zugewandten Stirnseite 194 in Anlage gelangt mit der der ersten Betätigungseinrichtung 38 zugewandten Stirnseite 70 des ersten Ventilkolbens 12. Darauffolgend wirkt die Führungshülse 86 der ersten Rasteinrichtung 16 auf den ersten Ventilkolben 12 in Richtung der zweiten Betätigungseinrichtung 40 ein, wodurch der erste Ventilkolben 12 von seinem Ventilsitz 146 abhebt. Bei dieser Verfahrbewegung werden die in ihrer Freigabeposition 226 an der Steuerfläche 98 des ersten Steuerkörpers 24 der ersten Rasteinrichtung 16 anliegenden Kugeln 20 in Radialrichtung unter Einwirkung der Kraft der ersten Druckfeder 110 der ersten Rasteinrichtung 16 durch den ersten Steuerkörper 24 der ersten Rasteinrichtung 16 in ihre Rastposition 22 gedrückt, sobald die radialen Durchgänge 96 der Führungshülse 86 der ersten Rasteinrichtung 16 in Axialrichtung 30 gesehen in Überdeckung mit dem Innenumfang des zweiten Steuerkörpers 74 der ersten Rasteinrichtung1 6 im Bereich der die Anschlagfläche 80 aufweisenden Innendurchmesser-Erweiterung 78 des zweiten Steuerkörpers 74 gelangen. Dort ist die Führungshülse 86 in ihrer Blockierstellung angeordnet.

Der Verfahrweg der Führungshülse 86 gegenüber dem zweiten Steuerkörper 74 zwischen ihrer den Ventilkolben 12, 14 entferntest angeordneten Endstellung und ihrer Blockierstellung beträgt in etwa ein Drittel der Länge des zweiten Steuerkörpers 74 in Richtung der Längsachse 30 der Ventilkolben 12, 14. Der Verfahrweg des ersten Steuerkörpers 24 gegenüber der Führungshülse 86 zwischen seiner den Ventilkolben 12, 14 entferntest angeordneten Endstellung und seiner Blockierstellung beträgt in etwa ein Sechstel der Länge des zweiten Steuerkörpers 74 in Richtung der Längsachse 30 der Ventilkolben 12, 14.

Gleichzeitig wirkt der erste Steuerkörper 24 der ersten Rasteinrichtung 16 mit seiner der zweiten Betätigungseinrichtung 40 zugewandten Stirnseite 212 über die Steuerstange 206 auf den ersten Steuerkörper 24 der zweiten Rasteinrichtung 18 ein, so dass dieser gegenüber der Führungshülse 86 der zweiten Rasteinrichtung 18 entgegen der Wirkung der ersten Druckfeder 110 der zweiten Rasteinrichtung 18 verfahren wird bis dessen zweite Stufe 104 in Anlage mit der innenumfangsseitigen Stufe 90 der Führungshülse 86 der zweiten Rasteinrichtung 18 gelangt. Bei dieser Verfahrbewegung gibt der bislang mit seinem größten Außendurchmesser 100 die Kugeln 20 in ihrer Rastposition blockierende erste Steuerkörper 24 der zweiten Rasteinrichtung 18 die Kugeln 20 für eine Bewegung in ihre Freigabeposition 226 frei, sobald in Axialrichtung 30 gesehen die Steuerfläche 98 des ersten Steuerkörpers 24 der zweiten Rasteinrichtung 18 in Überdeckung mit den radialen Durchgängen 96 der Führungshülse 86 der zweiten Rasteinrichtung 18 gelangen.

Liegen die Kugeln 20, in ihrer Freigabeposition 226 angeordnet, an der Steuerfläche 98 des ersten Steuerkörpers 24 der zweiten Rasteinrichtung 18 an, ist die Führungshülse 86 der zweiten Rasteinrichtung 18 für eine Verfahrbewegung in Richtung von den Ventilkolben 12, 14 weg freigegeben und die zweite Rasteinrichtung 18 in unverrastetem Zustand. Nun nimmt der erste Steuerkörper 24 der zweiten Rasteinrichtung 18 die Führungshülse 86 der zweiten Rasteinrichtung 18 mit bis die Führungshülse 86 mit ihrer außenumfangsseitigen Stufe 88 in Anlage gelangt mit der zweiten Stufe 64 der Ausnehmung 58 des Gehäuses 48 der zweiten Betätigungseinrichtung 40. Gleichzeitig wirkt der zweite Ventilkolben 14, mittels der zweiten Druckfeder 184 vorgespannt, auf den Ventilvorsteuerkolben 190 dahingehenden ein, dass der Ventilvorsteuerkolben 190, jederzeit mit seiner jeweiligen Stirnseite 192, 196 in Anlage mit der der zweiten Rasteinrichtung 18 zugewandten Stirnseite 72 des zweiten Ventilkolbens 14 bzw. der den Ventilkolben 12, 14 zugewandten Stirnseite 194 der Führungshülse 86 der zweiten Rasteinrichtung 18, in Richtung der zweiten Betätigungseinrichtung 40 verfahren wird bis der zweite Ventilkolben 14 in Anlage mit seinem Ventilsitz 148 gelangt. Bei der dahingehenden Verfahrbewegung ändern die Kugeln 20 der jeweiligen Rasteinrichtung 16, 18 auf ihrem Weg ihre Position in Axial- 30 und Radialrichtung. Dabei ist jede in einem Durchgang 96 der jeweiligen Führungshülse 86 der beiden Rasteinrichtungen 16, 18 angeordnete Kugel 20 jederzeit zumindest teilweise zwischen dem ersten 24 und dem zweiten 74 Steuerkörper der jeweiligen Rasteinrichtung 16, 18 angeordnet.

Bei dieser Anordnung der Ventilkolben 12, 14 ist der Druckversorgungsanschluss P fluidführend mit dem Arbeitsanschluss A verbunden, die beide von dem Rücklaufanschluss T getrennt sind.

Sollen die Ventilkolben 12, 14 wieder in ihre in Fig. 1 gezeigte Stellung gebracht werden, wird der Betätigungsmagnet der zweiten Betätigungseinrichtung 40 bestromt.

## Patentansprüche

1. Ventilvorrichtung mit einem Ventilgehäuse (10), in dem Fluidanschlussstellen (P, A, T) vorgesehen sind und in dem mindestens ein Ventilkolben (12, 14) längsverfahrbar ist, der jeweils zumindest zwei der Fluidanschlussstellen (P, A, T) in Abhängigkeit seiner Verfahrstellung entweder voneinander trennt oder miteinander verbindet, und mit mindestens einer Rasteinrichtung (16, 18) für jeden Ventilkolben (12, 14) zum wiederlösbaren Festlegen des jeweiligen Ventilkolbens (12, 14) in einer seiner Verfahrstellungen, die jeweils zumindest ein in eine Rastposition (22) bringbares Rastmittel (20) aufweist, wobei als Teil der jeweiligen Rasteinrichtung (16, 18) zum wiederlösbaren Festlegen des jeweiligen Ventilkolbens (12, 14) zumindest ein unabhängig von dem jeweiligen Ventilkolben (12, 14) bewegbarer Steuerkörper (24) vorgesehen ist, der derart eingerichtet ist, dass dieser in zumindest einer Blockierstellung ein Verlassen der Rastposition (22) des jeweiligen in der Rastposition (22) angeordneten Rastmittels (20) durch ein Blockieren des Rastmittels (20) verhindert, **dadurch gekennzeichnet, dass** zwei Ventilkolben (12, 14) vorgesehen sind, auf deren voneinander abgewandten Stirnseiten (70, 72) jeweils eine Rasteinrichtung (16, 18) für den jeweils benachbarten Ventilkolben (12, 14) und eine Betätigungseinrichtung (38, 40) angeordnet sind, wobei die Ventilvorrichtung derart eingerichtet ist, dass, wenn die eine Betätigungseinrichtung (38, 40) aktiviert wird, diese die Rasteinrichtung (16, 18) ihres benachbarten Ventilkolbens (12, 14) von ihrem unverrasteten in ihren verrasteten Zustand und die Rasteinrichtung (18, 16) des anderen Ventilkolbens (14, 12) von ihrem verrasteten in ihren unverrasteten Zustand bringt, und umgekehrt.

2. Ventilvorrichtung nach Anspruch 1, **dadurch gekennzeichnet, dass** die Rasteinrichtung (16, 18) zumindest ein in dem Ventilgehäuse (10) stationäres Widerlager (80) für das jeweilige Rastmittel (20) aufweist, an dem das in seiner Rastposition (22) angeordnete Rastmittel (20) anliegt und dass der eine Steuerkörper (24) in seiner zumindest einen Blockierstellung das Rastmittel (20) blockiert gegen ein außer Anlage geraten mit dem Widerlager (80).

3. Ventilvorrichtung nach Anspruch 1 oder 2, **dadurch gekennzeichnet, dass**, wenn der eine Steuerkörper (24) in seiner zumindest einen Freigabestellung angeordnet ist, die Blockierung des jeweiligen Rastmittels (20) aufgehoben ist für ein außer Anlage geraten mit dem in dem Ventilgehäuse (10) stationären Widerlager (80).

4. Ventilvorrichtung nach einem der voranstehenden Ansprüche, **dadurch gekennzeichnet, dass** das jeweilige Rastmittel (20) zwischen seiner Rastposition (22) und seiner Freigabeposition (226) bewegbar in einer Wand einer hohlen Führungshülse (86) der Rasteinrichtung (16, 18) geführt ist, deren radiale Wandstärke geringer ist als der größte Durchmesser des einzelnen Rastmittels (20).

5. Ventilvorrichtung nach einem der voranstehenden Ansprüche, **dadurch gekennzeichnet, dass** der eine Steuerkörper (24) zwischen seiner zumindest einen Blockierstellung und seiner zumindest einen Freigabestellung in der Führungshülse (86) verfahrbar geführt ist, die zwischen ihrer zumindest einen Blockierstellung und ihrer zumindest einen Freigabestellung in einem das Widerlager (80) aufweisenden zweiten Steuerkörper (74) verfahrbar geführt ist.

6. Ventilvorrichtung nach einem der voranstehenden Ansprüche, **dadurch gekennzeichnet, dass** die Führungshülse (86), wenn das jeweilige Rastmittel (20) in seiner Rastposition (22) angeordnet ist, in ihrer zumindest einen Blockierstellung angeordnet ist und durch das Rastmittel (20) für eine Verfahrbewegung in dem zweiten Steuerkörper (74) in zumindest eine Verfahrrichtung gesperrt ist, und dass gleichzeitig der eine Steuerkörper (24) für eine Verfahrbewegung in der Führungshülse (86) freigegeben ist.

7. Ventilvorrichtung nach einem der voranstehenden Ansprüche, **dadurch gekennzeichnet, dass** die Führungshülse (86), wenn das jeweilige Rastmittel (20) in seiner Freigabeposition (226) angeordnet ist, während ihrer Verfahrbewegungen in dem zweiten Steuerkörper (74) das Rastmittel (20) und/oder den einen Steuerkörper (24) mitnimmt, der durch das Rastmittel (20) gegenüber der Führungshülse (86) festgelegt ist.

8. Ventilvorrichtung nach einem der voranstehenden Ansprüche, **dadurch gekennzeichnet, dass** der eine Steuerkörper (24) mittels eines Energiespeichers (110) in Richtung seiner zumindest einen Blockierstellung vorgespannt ist und/oder mittels eines Gestängetriebes (116) entgegen der Kraft des Energiespeichers (110) von seiner Blockierstellung in seine zumindest eine Freigabestellung bringbar ist.

9. Ventilvorrichtung nach einem der voranstehenden Ansprüche, **dadurch gekennzeichnet, dass** die Führungshülse (86) zumindest in ihrer Blockierstellung derart auf den Ventilkolben (12, 14) einwirkt, dass der Ventilkolben (12, 14) entgegen der Kraft eines weiteren Energiespeichers (184) von seinem Ventilsitz (146, 148) abgehoben ist, der den Ventilkolben (12, 14) in seine Schließstellung vorspannt.

10. Ventilvorrichtung nach einem der voranstehenden Ansprüche, **dadurch gekennzeichnet, dass** sich der Gestängetrieb (116) zentral durch den zumindest einen Ventilkolben (12, 14) erstreckt.

11. Ventilvorrichtung nach einem der voranstehenden Ansprüche, **dadurch gekennzeichnet, dass** die Führungshülse (86) und jeder Ventilkolben (12, 14) in Relation zueinander verfahrbar entlang einer Längsachse (30) jedes Ventilkolbens (12, 14) geführt sind.

12. Ventilvorrichtung nach einem der voranstehenden Ansprüche, **dadurch gekennzeichnet, dass** der erste Steuerkörper (24) zumindest abschnittsweise einen zylindrisch ausgebildeten Außendurchmesser (100) aufweist, der in der Führungshülse (86) geführt ist, und der, wenn der erste Steuerkörper (24) in seiner Blockierstellung angeordnet ist, die Bewegung des jeweiligen Rastmittels (20) derart begrenzt, dass dieses in seiner Rastposition (22) blockiert gehalten ist.

13. Ventilvorrichtung nach einem der voranstehenden Ansprüche, **dadurch gekennzeichnet, dass** der erste Steuerkörper (24) mittels eines Energiespeichers (110) in Richtung seiner Blockierstellung und jedes Ventilkolbens (12, 14) vorgespannt ist.

14. Ventilvorrichtung nach einem der voranstehenden Ansprüche, **dadurch gekennzeichnet, dass** jede der beiden Betätigungseinrichtungen (38, 40) bei Aktivierung auf jeweils zumindest ihren benachbarten Ventilkolben (12, 14) und beide Rasteinrichtungen (16, 18) einwirkt.

15. Ventilvorrichtung nach einem der voranstehenden Ansprüche, **dadurch gekennzeichnet, dass** die erste (16) und die zweite (18) Rasteinrichtung durch zumindest einen zwischen diesen angeordneten Teil (206) des Gestängetriebes (116) miteinander wirkverbunden sind, der an den beiden ersten Steuerkörpern (24) angreift.

16. Ventilvorrichtung nach einem der voranstehenden Ansprüche, **dadurch gekennzeichnet, dass** der Verfahrweg (S1) jeder Führungshülse (86) von ihrer den Ventilkolben (12, 14) entferntest angeordneten Endstellung zu ihrer auf den benachbarten Ventilkolben (12, 14) auf diesem Verfahrweg erstmals einwirkenden Stellung größer oder gleich ist als der Verfahrweg (S2) dieser Führungshülse (86) von der auf den benachbarten Ventilkolben (12, 14) erstmals einwirkenden Stellung zu ihrer Blockierstellung.

17. Ventilvorrichtung nach einem der voranstehenden Ansprüche, **dadurch gekennzeichnet, dass** zwischen den beiden Ventilkolben (12, 14) der weitere Energiespeicher (184) vorgesehen ist, der die beiden Ventilkolben (12, 14) voneinander weg beaufschlagt.

18. Ventilvorrichtung nach einem der voranstehenden Ansprüche, **dadurch gekennzeichnet, dass** die beiden Ventilkolben (12, 14) in Richtung voneinander weg, an jeweils einem Ventilsitz (146, 148) in ihre Schließstellung gelangen.

19. Ventilvorrichtung nach einem der voranstehenden Ansprüche, **dadurch gekennzeichnet, dass** die beiden Ventilkolben (12, 14) in einem austauschbaren Einsatzgehäuseteil (122) aufgenommen sind, an dem die Ventilsitze (146, 148) ausgebildet sind.

## Claims

1. Valve apparatus with a valve housing (10), in which fluid connection points (P, A, T) are provided and in which at least one valve piston (12, 14) is longitudinally displaceable, said valve piston in each case connecting at least two of the fluid connection points (P, A, T) as a function of its displacement position either to one another or such that they can be separated from one another, and having at least one latching device (16, 18) for each valve piston (12, 14) for detachably fixing the respective valve piston (12, 14) in one of its displacement positions, which in each case comprises at least one latching means (20) that can be moved into a latching position (22), wherein, as part of the respective latching device (16, 18) for detachably fixing the respective valve piston (12, 14), at least one control body (24) that can be moved independently of the respective valve piston (12, 14) is provided, said control body being arranged such that, in at least one blocking position, this prevents the respective latching means (20) arranged in the latching position (22) from leaving the latching position (22) by blocking the latching means (20), **characterised in that** two valve pistons (12, 14) are provided, on the end faces (70, 72) of which, facing away from one other, a latching device (16, 18) for the respective adjacent valve piston (12, 14) and an actuating device (38, 40) are in each case arranged, the valve apparatus being arranged such that, when one actuating device (38, 40) is activated, this moves the latching device (16, 18) of its adjacent valve piston (12, 14) from its unlatched state into its latched state and the latching device (18, 16) of the other valve piston (14, 12) from its latched state into its unlatched state, and vice versa.

2. Valve apparatus according to claim 1, **characterised in that** the latching device (16, 18) comprises at least one stationary counter bearing (80) in the valve housing (10) for the respective latching means (20), on which the latching means (20), which is arranged in its latching position (22), rests and **in that** one control body (24) in its at least one blocking position blocks the latching means (20) from coming out of contact with the counter bearing (80).

3. Valve apparatus according to either claim 1 or claim 2, **characterised in that**, when one control body (24) is arranged in its at least one release position, blocking of the respective latching means (20) is lifted to enable it to come out of contact with the stationary counter bearing (80) in the valve housing (10).

4. Valve apparatus according to one of the preceding claims, **characterised in that** the respective latching means (20) is guided such that it can be moved between its latching position (22) and its release position (226) in a wall of a hollow guide sleeve (86) of the latching device (16, 18), the radial wall thickness of which is smaller than the largest diameter of the individual latching means (20).

5. Valve apparatus according to one of the preceding claims, **characterised in that** one control body (24) is guided displaceably between its at least one blocking position and its at least one release position in the guide sleeve (86), which is displaceably guided between its at least one blocking position and its at least one release position in a second control body (74) comprising the counter bearing (80).

6. Valve apparatus according to one of the preceding claims, **characterised in that** the guide sleeve (86), when the respective latching means (20) is arranged in its latching position (22), is arranged in its at least one blocking position and is blocked by the latching means (20) for a displacement movement in the second control body (74) in at least one displacement direction, and **in that**, at the same time, one control body (24) is released for a displacement movement in the guide sleeve (86).

7. Valve apparatus according to one of the preceding claims, **characterised in that** the guide sleeve (86), when the respective latching means (20) is arranged in its release position (226), carries the latching means (20) and/or one control body (24) during its displacement movements in the second control body (74), said control body being fixed by the latching means (20) opposite the guide sleeve (86).

8. Valve apparatus according to one of the preceding claims, **characterised in that** one control body (24) is pre-tensioned by means of an energy accumulator (110) in the direction of its at least one blocking position and/or can be moved by means of a linkage drive (116) against the force of the energy accumulator (110) from its blocking position into its at least one release position.

9. Valve apparatus according to one of the preceding claims, **characterised in that** the guide sleeve (86), at least in its blocking position, acts on the valve piston (12, 14) such that the valve piston (12, 14) is lifted off its valve seat (146, 148) against the force of a further energy accumulator (184), which pre-tensions the valve piston (12, 14) in its closing position.

10. Valve apparatus according to one of the preceding claims, **characterised in that** the linkage drive (116) extends centrally through the at least one valve piston (12, 14).

11. Valve apparatus according to one of the preceding claims, **characterised in that** the guide sleeve (86) and each valve piston (12, 14) are guided displaceably in relation to one another along a longitudinal axis (30) of each valve piston (12, 14).

12. Valve apparatus according to one of the preceding claims, **characterised in that** the first control body (24) has, at least in sections, a cylindrically shaped outer diameter (100), which is guided in the guide sleeve (86) and which, when the first control body (24) is arranged in its blocking position, restricts the movement of the respective latching means (20) such that this remains blocked in its latching position (22).

13. Valve apparatus according to one of the preceding claims, **characterised in that** the first control body (24) is pre-tensioned by means of an energy accumulator (110) in the direction of its blocking position and each valve piston (12, 14).

14. Valve apparatus according to one of the preceding claims, **characterised in that** each of the two actuating devices (38, 40), when activated, act on at least their adjacent valve piston (12, 14) and both latching devices (16, 18) in each case.

15. Valve apparatus according to one of the preceding claims, **characterised in that** the first (16) and the second (18) latching device are operatively interconnected by means of a part (206), arranged between said devices, of the linkage drive (116), which comes into contact with the two first control bodies (24).

16. Valve apparatus according to one of the preceding claims, **characterised in that** the displacement path (S1) of each guide sleeve (86) from its end position arranged furthest from the valve pistons (12, 14) to its position acting for the first time on the adjacent valve piston (12, 14) on this displacement path is greater than or equal to the displacement path (S2) of this guide sleeve (86) from the position acting for the first time on the adjacent valve piston (12, 14) to its blocking position.

17. Valve apparatus according to one of the preceding claims, **characterised in that** the further energy accumulator (184) is provided between the two valve pistons (12, 14), said energy accumulator forcing the two valve pistons (12, 14) apart from one another.

18. Valve apparatus according to one of the preceding claims, **characterised in that** the two valve pistons (12, 14) move, in a direction leading away from one another, into their closing position on a valve seat (146, 148) in each case.

19. Valve apparatus according to one of the preceding claims, **characterised in that** the two valve pistons (12, 14) are received in a replaceable insert housing part (122) on which the valve seats (146, 148) are formed.

## Revendications

1. Système de soupape comprenant un corps (10) de soupape, dans lequel des points (P, A, T) de raccordement pour du fluide sont prévus et dans lequel peut se déplacer longitudinalement au moins un piston (12, 14) de soupape, qui, en fonction de sa position de déplacement, ou bien sépare l'un de l'autre, ou bien met en communication l'un avec l'autre, respectivement au moins deux points (P, A, T) de raccordement pour du fluide, et comprenant au moins un dispositif (16, 18) d'encliquetage pour chaque piston (12, 14) de soupape pour la fixation redétachable du piston (12, 14) de soupape respectif dans l'une de ses positions de déplacement, lequel dispositif a respectivement au moins un moyen (20) d'encliquetage pouvant être mis dans une position (22) d'encliquetage, dans lequel il est prévu, comme partie du dispositif (16, 18) d'encliquetage respectif, pour la fixation redétachable du piston (12, 14) de soupape respectif, au moins un corps (24) de commande, qui peut se déplacer indépendamment du piston (12, 14) de soupape respectif et qui est agencé de manière à ce qu'il empêche, par un blocage du moyen (20) d'encliquetage, dans au moins une position de blocage, le moyen (20) d'encliquetage, disposé respectivement dans la position (22) d'encliquetage, de quitter la position (22) d'encliquetage **caractérisé en ce qu'**il est prévu deux pistons (12, 14) de soupape, sur les côtés (70, 72) frontaux éloignés l'un de l'autre desquels sont disposés respectivement un dispositif (16, 18) d'encliquetage pour le piston (12, 14) de soupape respectivement voisin et un dispositif (38, 40) d'actionnement, dans lequel le système de soupape est agencé de manière à ce que, lorsque l'on active le un dispositif (38, 40) d'actionnement, celui-ci fait passer le dispositif (16, 18) d'encliquetage de son piston (12, 14) de soupape voisin de son état désencliqueté à son état encliqueté et le dispositif (18, 16) d'encliquetage de l'autre piston (14, 12) de soupape de son état encliqueté à son état désencliqueté, et inversement.

2. Système de soupape suivant la revendication 1, **caractérisé en ce que** le dispositif (16, 18) d'encliquetage a, pour le moyen (20) d'encliquetage respectif, au moins une butée (80) fixe dans le corps (10) de la soupape, à laquelle le moyen (20) d'encliquetage, disposé dans sa position (22) d'encliquetage, s'applique et **en ce que** le un corps (24) de commande empêche, dans sa au moins une position de blocage, le moyen (20) d'encliquetage de venir hors de contact avec la butée (80).

3. Système de soupape suivant la revendication 1 ou 2, **caractérisé en ce que**, si le un corps (24) de commande est disposé dans sa au moins une position de déblocage, le blocage du moyen (20) d'encliquetage est levé pour une venue hors de contact avec la butée (80) fixe dans le corps (10) de soupape.

4. Système de soupape suivant l'une des revendications précédentes, **caractérisé en ce que** le moyen (20) d'encliquetage respectif est guidé de manière mobile entre sa position (22) d'encliquetage et sa position (226) de déblocage dans une paroi d'un manchon (86) de guidage creux du dispositif (16, 18) d'encliquetage, dont l'épaisseur de paroi radiale est plus petite que le diamètre le plus grand du moyen (20) d'encliquetage individuel.

5. Système de soupape suivant l'une des revendications précédentes, **caractérisé en ce que** le un corps (24) de commande est guidé avec possibilité de se déplacer entre sa au moins une position de blocage et sa au moins une position de déblocage, dans le manchon (86) de guidage, qui, entre sa au moins une position de blocage et sa au moins une position de déblocage, est guidé avec possibilité de se déplacer dans un deuxième corps (74) de commande ayant la butée (80).

6. Système de soupape suivant l'une des revendications précédentes, **caractérisé en ce que** le manchon (86) de guidage, si le moyen (20) d'encliquetage respectif est disposé dans sa position (22) d'encliquetage, est disposé dans sa au moins une position de blocage et est, par le moyen (20) d'encliquetage, barré dans au moins un sens de déplacement pour un mouvement de déplacement dans le deuxième corps (74) de commande, et **en ce qu'**en même temps le un corps (24) de commande est débloqué pour un mouvement de déplacement dans le manchon (86) de guidage.

7. Système de soupape suivant l'une des revendications précédentes, **caractérisé en ce que** le manchon (86) de guidage, si le moyen (20) d'encliquetage respectif est disposé dans sa position (226) de déblocage, entraîne avec lui, pendant ses mouvements de déplacement dans le deuxième corps (74) de commande, le moyen (20) d'encliquetage et/ou le un corps (24) de commande, qui est fixé par le moyen (20) d'encliquetage par rapport au manchon (86) de guidage.

8. Système de soupape suivant l'une des revendications précédentes, **caractérisé en ce que** le un corps (24) de commande est précontraint, dans le sens de sa au moins une position de blocage, au moyen d'un accumulateur (110) d'énergie et/ou peut, au moyen d'une tringlerie (116) être passé, à l'encontre de la force de l'accumulateur (110) d'énergie, de sa position de blocage à sa au moins une position de déblocage.

9. Système de soupape suivant l'une des revendications précédentes, **caractérisé en ce que** le manchon (86) de guidage agit, au moins dans sa position de blocage, sur le piston (12, 14) de soupape, de manière à ce que le piston (12, 14) de soupape soit soulevé, à l'encontre de la force d'un autre accumulateur (184) d'énergie, de son siège (146, 148) de soupape, qui précontraint le piston (12, 14) de soupape dans sa position de fermeture.

10. Système de soupape suivant l'une des revendications précédentes, **caractérisé en ce que** la tringlerie (116) s'étend centralement dans le au moins un piston (12, 14) de soupape.

11. Système de soupape suivant l'une des revendications précédentes, **caractérisé en ce que** le manchon (86) de guidage et chaque piston (12, 14) de soupape sont guidés en relation l'un par l'autre avec possibilité de se déplacer le long d'un axe (30) longitudinal de chaque piston (12, 14) de soupape.

12. Système de soupape suivant l'une des revendications précédentes, **caractérisé en ce que** le premier corps (24) de commande a, au moins par endroits, un diamètre (100) extérieur de constitution cylindrique, qui est guidé dans le manchon (86) de guidage et qui, si le premier corps (24) de commande est disposé dans sa position de blocage, limite le déplacement du moyen (20) d'encliquetage respectif de manière à ce que celui-ci soit maintenu bloqué dans sa position (22) d'encliquetage.

13. Système de soupape suivant l'une des revendications précédentes, **caractérisé en ce que** le premier corps (24) de commande est précontraint, dans le sens de sa position de blocage et de chaque piston (12, 14) de soupape, au moyen d'un accumulateur (110) d'énergie.

14. Système de soupape suivant l'une des revendications précédentes, **caractérisé en ce que** chacun des deux dispositifs (38, 40) d'actionnement agit, lors de l'activation, sur respectivement au moins son piston (12, 14) de soupape voisin et sur les deux dispositifs (16, 18) d'encliquetage.

15. Système de soupape suivant l'une des revendications précédentes, **caractérisé en ce que** le premier (16) et le deuxième (18) dispositifs d'encliquetage sont en liaison d'action l'un avec l'autre par au moins une partie (206), disposée entre ceux-ci, de la tringlerie (116), qui attaque les deux premiers corps (24) de guidage.

16. Système de soupape suivant l'une des revendications précédentes, **caractérisé en ce que** le chemin (S1) de déplacement de chaque manchon (86) de guidage, de sa position d'extrémité disposée le plus loin du piston (12, 14) de soupape à sa position agissant pour la première fois sur ce trajet de déplacement sur le piston (12, 14) de soupape voisin, est supérieur ou égal au chemin (S2) de déplacement de ce manchon (86) de guidage de la position agissant pour la première fois sur le piston (12, 14) de soupape voisin à sa position de blocage.

17. Système de soupape suivant l'une des revendications précédentes, **caractérisé en ce qu'**il est prévu, entre les deux pistons (12, 14) de soupape, l'autre accumulateur (184) d'énergie, qui tend à éloigner l'un de l'autre les deux pistons (12, 14) de soupape.

18. Système de soupape suivant l'une des revendications précédentes, **caractérisé en ce que** les deux pistons (12, 14) de soupape arrivent dans la direction les éloignant l'un de l'autre dans leur position de fermeture sur respectivement un siège (146, 148) de soupape.

19. Système de soupape suivant l'une des revendications précédentes, **caractérisé en ce que** les deux pistons (12, 14) de soupape sont reçus dans une partie (122) d'enveloppe d'insert remplaçable, sur laquelle sont constitués les sièges (146, 148) de soupape.
